# EUROPÄISCHE PATENTSCHRIFT

(11) **EP 3 644 802 B1**
(45) Veröffentlichungstag und Bekanntmachung des Hinweises auf die Patenterteilung: **05.05.2021**
(21) Anmeldenummer: 18743400.6
(22) Anmeldetag: 26.06.2018
(51) Int. Cl.: A47J 31/40, A23L 2/385

(54) **VORRICHTUNG ZUR HERSTELLUNG EINES GETRÄNKS**
DEVICE FOR PRODUCING A BEVERAGE
DISPOSITIF POUR PRODUIRE UNE BOISSON

(30) Priorität: 26.06.2017 DE 102017210727
(43) Veröffentlichungstag der Anmeldung: 06.05.2020
(73) Patentinhaber: Freezio AG, 8580 Amriswil (CH)
(72) Erfinder: KRÜGER, Marc, 51467 Bergisch Gladbach (DE); EMPL, Günter, 51429 Bergisch Gladbach (DE); FISCHER, Daniel, 8590 Romanshorn (CH)
(74) Vertreter: Kutzenberger Wolff & Partner
(86) Internationale Anmeldenummer: PCT/EP2018/067114
(87) Internationale Veröffentlichungsnummer: WO 2019/002293

(56) Entgegenhaltungen:
- US-A1- 2004 191 372
- US-A1- 2011 210 140
- US-A1- 2015 335 197
- US-A1- 2016 068 334
- US-A1- 2016 272 414

## Beschreibung

### Stand der Technik

Die vorliegende Erfindung geht aus von einer Vorrichtung zur Herstellung eines Getränks

### Offenbarung der Erfindung

Es ist eine Aufgabe der vorliegenden Erfindung eine Vorrichtung zur Herstellung eines Getränks unter Verwendung von auswechselbaren Kartuschen zur Verfügung zu stellen, bei welcher das Beladen und Entladen der Vorrichtung mit Kartuschen erheblich vereinfacht wird und somit einen gegenüber zu gattungsgemäßen Vorrichtungen aus dem Stand der Technik erhöhten Bedienkomfort für den Benutzer bietet. Die Erfindung ist durch die Ansprüche definiert.

Grundsätzlich sind Vorrichtungen zur Herstellung eines Getränks mittels Kartuschen und entsprechende Kartuschen aus der Druckschrift US 2004/ 191 372 A1 bekannt. Diese Druckschrift offenbart eine Kaffeemaschine, bei welcher ein Kaffeegetränk mittels einer Kartusche, in welcher Kaffeegranulat enthalten ist, maschinell erzeugbar ist. Die Kartusche wird hierzu in eine aufklappbare Brühkammer manuell durch den Benutzer eingelegt. Weitere Vorrichtungen zur Herstellung von Getränken mittels vorportionierter Kartuschen sind aus den Druckschriften US 2016 / 272 414 A1, US 2016 / 068 334 A1, US 2015 / 335 197 A1 und US 2011 / 210 140 A1 bekannt.

Die Aufgabe der vorliegenden Erfindung wird gelöst durch eine Vorrichtung nach Anspruch 1.

Die erfindungsgemäße Vorrichtung hat den Vorteil, dass die Kartusche in einer von außerhalb der Vorrichtung zugänglichen Aufnahmeöffnung aufgenommen wird. Die Aufnahmeöffnung wird dabei von zwei separaten Halteelementen gebildet, wobei das eine Halteelement gegenüber dem anderen Halteelement beweglich ist. Auf diese Weise wird ein einfaches Einsetzen der Kartusche durch einen Benutzer ermöglicht, während gleichzeitig eine sichere Fixierung der Kartusche, insbesondere in einer korrekten Orientierung, in der Arbeitsstellung gewährleistet wird. Die Kartuschenhalterung ist einfach zu bedienen und auf Grund wenig beweglicher Teile zugleich wartungsarm. Zudem erfolgt das Einsetzen der Kartusche und das Überführen von der Ladestellung in die Arbeitsstellung mit kurzen Wegen für die beweglichen Teile, so dass die Gesamtzeit zur Zubereitung des Getränks vorteilhafterweise minimiert wird.

Die zu diesem Gegenstand der vorliegenden Erfindung gemachten Ausführungen gelten für die anderen Gegenstände der vorliegenden Erfindung gleichermaßen und umgekehrt.

Die vorliegende Erfindung betrifft eine Vorrichtung mit einer Kartuschenhalterung, die die Kartusche abstützt und/oder führt. Die Kartusche weist einen Hohlraum auf, in dem sich ein Getränke- und/oder Lebensmittelsubstrat befindet. Dieses Substrat ist vorzugsweise flüssig und insbesondere ein Konzentrat und wird mit einem Lösemittel, insbesondere Wasser, zur Herstellung des Getränks oder Lebensmittels gemischt und dann in einem Behälter, insbesondere einem Glas, das vorzugsweise auf einer unterhalb der Halterung angeordneten Auflage der Vorrichtung steht, aufgefangen. Das Getränke- und/oder Lebensmittelsubstrat umfasst vorzugsweise flüssige Pre-Mix-Bestandteile für Erfrischungsgetränke, wie koffein-, kohlensäure-, frucht- und/oder zuckerhaltige Limonaden und Säfte, Bier(misch)getränke oder sonstige alkoholische oder nicht alkoholische (Misch-)Getränke.

Vorzugsweise ist die Kartusche im Wesentlichen flaschenförmig vorgesehen und weist insbesondere einen Kartuschenhals auf. Besonders bevorzugt wird die Kartusche mit der Öffnung nach unten, d.h. in Richtung der Schwerkraft, in die Kartuschenhalterung eingesetzt.

Erfindungsgemäß ist vorgesehen, dass die Kartuschenaufnahme ein erstes Halteelement und ein zweites Halteelement aufweist, wobei das erste Halteelement die Aufnahmeöffnung aufweist und wobei zur Überführung der Kartuschenaufnahme von der Ladestellung in die Arbeitsstellung oder von der Arbeitsstellung in die Ladestellung das erste Halteelement relativ zum zweiten Halteelement bewegbar ausgebildet ist. Besonders bevorzugt weist das zweite Halteelement eine Ausnehmung auf, die in der Arbeitsstellung form- und/oder kraftschlüssig mit dem ersten Halteelement zusammenwirkt. Hierdurch wird die Stabilität der Vorrichtung vorteilhafterweise weiter erhöht, da die Kartusche nun beim Einsetzen in das erste Halteelement in der Ladestellung entlang des gesamten Umfangs des Kartuschenhalses sicher gehalten wird. Das zweite Halteelement sichert dabei in vorteilhafter Weise das erste Halteelement in der Arbeitsstellung.

Erfindungsgemäß ist vorgesehen, dass das zweite Halteelement eine weitere Aufnahmeöffnung aufweist und wobei das erste und das zweite Halteelement relativ zueinander derart angeordnet sind, dass die Aufnahmeöffnung und die weitere Aufnahmeöffnung deckungsgleich und entlang einer axialen Richtung zueinander versetzt angeordnet sind. Besonders bevorzugt sind die Aufnahmeöffnung und/oder die weitere Aufnahmeöffnung kreisrund oder oval vorgesehen. Dadurch, dass in einem solchen Fall beispielweise zwei im Wesentlichen kongruente Ringelemente vorgesehen sind, die ganz besonders bevorzugt in der Arbeitsstellung verriegelnd zusammenwirkend angeordnet sind, wird die Stabilität der Vorrichtung vorteilhafterweise deutlich erhöht. Denn die Kartusche wird in diesem Fall entlang des Umfangs ihres Kartuschenhalses von zwei Elementen gehalten, anstatt nur von einem, wie z.B. in dem Fall, dass das erste und das zweite Halteelement u-förmig ausgebildet sind. Zudem ist eine solche axiale Verschiebung, die vorzugsweise parallel zu der Längsachse der Kartusche vorgesehen ist, stabiler und die Gefahr einer Fehlpositionierung, beispielsweise durch ein Verrutschen, der Kartusche wird minimiert.

Erfindungsgemäß ist vorgesehen, dass das erste und das zweite Halteelement in axialer Richtung in der Ladestellung voneinander beabstandet und in der Arbeitsstellung gegenüber der Ladestellung einander angenähert sind. Besonders bevorzugt ist das erste Halteelement in vertikaler, also insbesondere axialer, Richtung über dem zweiten Halteelement angeordnet. Hierdurch ist in besonders vorteilhafter Weise ein stabiler und kompakter Aufbau der Kartuschenhalterung realisierbar.

Gemäß einer weiteren bevorzugten Ausführungsform ist vorgesehen, dass das erste Halteelement ein Ringbauteil umfasst und wobei das zweite Halteelement eine in Richtung des Ringbauteils offene u-förmige Ausbuchtung aufweist, wobei das erste Halteelement gegenüber dem zweiten Halteelement um eine Drehachse verkippbar ist. Besonders bevorzugt ist das Ringbauteil gegenüber dem zweiten Halteelement in der Ladestellung verkippt, ganz besonders bevorzugt ist der Querschnitt des Ringbauteils in der Arbeitsstellung parallel zu einer Haupterstreckungsebene des zweiten Halteelements. Hierdurch wird in vorteilhafter Weise zugleich eine einfache Bedienung ermöglicht und eine hohe Stabilität gewährleistet, da die Kartusche am gesamten Umfang des Kartuschenhalses von dem Ringbauteil gehalten wird und zugleich durch die Neigung des Ringbauteils ein einfaches Einsetzen der Kartusche durch einen Benutzer ermöglicht wird.

Gemäß einer weiteren bevorzugten Ausführungsform ist vorgesehen, dass die Vorrichtung einen Handhebel zum Überführen der Kartuschenaufnahme von der Ladestellung in die Arbeitsstellung oder von der Arbeitsstellung in die Ladestellung aufweist, wobei der Handhebel an das erste und/oder zweite Halteelement angebunden ist. Besonders bevorzugt wirkt der Handhebel mit einer Mechanik derart zusammen, dass die Kartuschenaufnahme in der Arbeitsstellung, insbesondere reversibel, verriegelt ist. Hierdurch ist eine Überführung der Kartuschenaufnahme zwischen den Stellungen in besonders einfacher Weise möglich. Dabei ist dank des Hebels der nötige Kraftaufwand des Benutzers für das Überführen gering.

Gemäß einer weiteren bevorzugten Ausführungsform ist vorgesehen, dass der Handhebel zwischen einer ersten Betätigungsstellung, in welcher die Kartuschenaufnahme in der Ladestellung ist, und einer zweiten Betätigungsstellung, in welcher die Kartuschenaufnahme in der Arbeitsstellung ist, verschwenkbar ist, wobei der Handhebel einen Handgriff umfasst, welcher in der ersten Betätigungsstellung die Kartuschenaufnahme zumindest teilweise umschließt. Hierdurch wird vorteilhafterweise eine besonders ergonomische Bedienbarkeit der Vorrichtung erzielt. Zusätzlich wird dadurch, dass der Handgriff die Kartuschenaufnahme teilweise umschließt eine zusätzliche Sicherung realisiert.

### Figurenbeschreibung

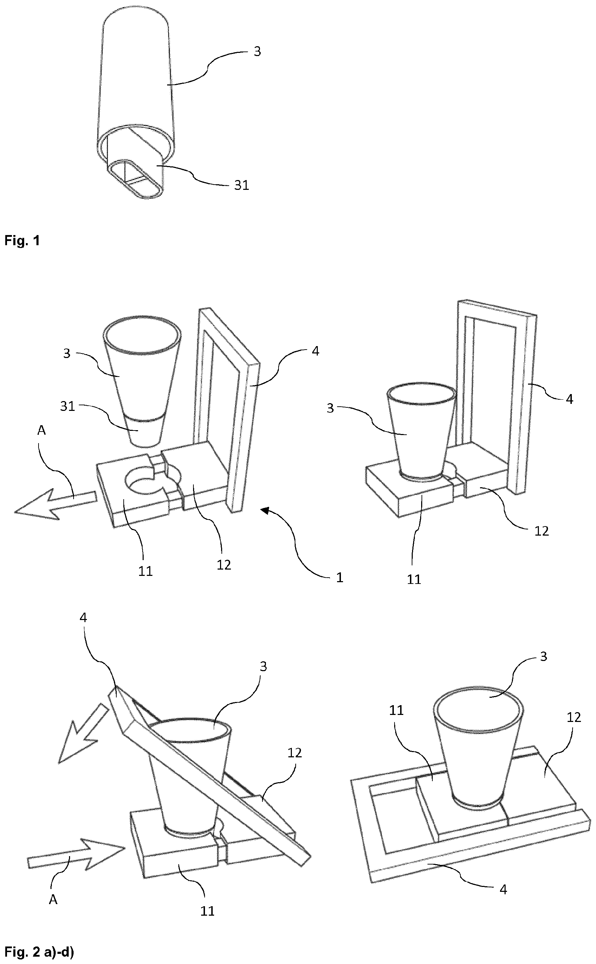

Im folgendem wird die Erfindung anhand der Figuren 1 bis 8 erläutert. Diese Erläuterungen sind lediglich beispielhaft und schränken den allgemeinen erfindungsgemäßen Gedanken nicht ein. Dabei werden gleiche Teile mit den gleichen Bezugszeichen bezeichnet. Die einzelnen Zeichnungen sind dabei von links nach rechts und von oben nach unten durchnummeriert.
- Figur 1: zeigt eine Kartusche, wie sie in der erfindungsgemäßen Vorrichtung verwendet wird, gemäß einer möglichen Ausführungsform der vorliegenden Erfindung.
- Figuren 2a - 2d: zeigen eine Kartuschenhalterung gemäß einem nicht erfindungsgemäßen ersten Beispiel beim Übergang von einer Ladestellung in eine Arbeitsstellung.
- Figuren 3a bis 3d: zeigen eine Kartuschenhalterung gemäß einem zweiten nicht erfindungsgemäßen Beispiel beim Übergang von der Ladestellung in die Arbeitsstellung.
- Figuren 4a bis 4d: zeigen eine Kartuschenhalterung gemäß einem dritten nicht erfindungsgemäßen Beispiel beim Übergang von der Ladestellung in die Arbeitsstellung.
- Figuren 5a bis 5d: zeigen eine Kartuschenhalterung gemäß einer erfindungsgemäßen Ausführungsform der vorliegenden Erfindung beim Übergang von der Ladestellung in die Arbeitsstellung.
- Figuren 6a bis 6d: zeigen eine Kartuschenhalterung gemäß einem nicht erfindungsgemäßen Beispiel beim Übergang von der Ladestellung in die Arbeitsstellung.
- Figuren 7a bis 7d: zeigen eine Kartuschenhalterung gemäß einem nicht erfindungsgemäßen Beispiel beim Übergang von der Ladestellung in die Arbeitsstellung. Figuren 8a bis 8d zeigen eine Kartuschenhalterung gemäß einem nicht erfindungsgemäßen Beispiel beim Übergang von der Ladestellung in die Arbeitsstellung.

In Figur 1 ist eine Kartusche 3, wie sie in der erfindungsgemäßen Vorrichtung verwendet wird, gemäß einer möglichen Ausführungsform der vorliegenden Erfindung dargestellt. Die Kartusche 3 ist hier im Wesentlichen zylinderförmig ausgebildet und weist an einem Ende einen Kartuschenhals 31 auf, in dem ein Zulauf, insbesondere für Wasser, und ein Auslauf für das fertige Getränk vorgesehen sind. Eine derartige Kartusche 3 kann dabei auch beliebige andere Formen aufweisen. Entscheidend ist dabei vor allem, dass die Kartusche 3 in die Vorrichtung eingesetzt werden kann und insbesondere der Kartuschenhals 31 mit einer Kartuschenhalterung 1 der Vorrichtung zusammenwirken kann, um sicher gehalten zu werden. Die Kartusche 3 enthält eine Getränkesubstanz, die durch Interaktion mit Wasser ein Getränk bildet.

In den Figuren 2a - 2d ist eine Kartuschenhalterung 1 gemäß einem nicht erfindungsgemäßen ersten Beispiel beim Übergang von einer Ladestellung in eine Arbeitsstellung in mehreren Zwischenschritten dargestellt. Dabei ist die hier dargestellte Kartuschenhalterung 1 Teil einer Getränkezubereitungsvorrichtung, die jedoch aus Gründen der Übersichtlichkeit hier nicht dargestellt ist. In Figur 2a ist dabei der Beginn eines Getränkezubereitungszyklus dargestellt. Eine Kartuschenaufnahme umfasst ein erstes Halteelement 11, das hier eine im Wesentlichen teilkreisförmige Ausnehmung aufweist, wobei das erste Halteelement 11 von einem zweiten Halteelement 11, das mit dem ersten Halteelement 11 zusammen eine kreisförmige Aufnahmeöffnung bildet, beabstandet wird, um die Kartuschenhalterung 1 in eine Ladestellung zu überführen. DazL wird es entlang einer, hier linear vorgesehenen, Verschieberichtung A verschoben.

Die Kartusche 3 ist hier im Wesentlichen kegelstumpfförmig vorgesehen und wird in die Ausnehmung des ersten Halteelements 11 eingesetzt, wo sie auf Grund ihrer Form und der Schwerkraft formschlüssig gehalten wird. Dies ist in Figur 2b dargestellt.

Um ein Getränk zuzubereiten, wird die Kartuschenhalterung 1 von der Ladestellung in eine Arbeitsstellung, in der das erste Halteelement 11 und das zweite Halteelement 12 einander berühren und somit vorliegend eine kreisrunde Aufnahmeöffnung bilden, überführt. Das erste Halteelement 11 und das zweite Halteelement 12 umfassen folglich Randabschnitte (eines Kreises), die zusammenwirkend die Kartusche 3 in ihrer Lage halten bzw. fixieren.

Hier wird dazu ein Handhebel 4, der gemäß der dargestellten Ausführungsform an dem zweiten Halteelement 12 angebracht ist, aber ebenso an dem ersten Halteelement 11 angebracht sein könnte, von einer vertikalen Stellung in einer horizontale Stellung überführt. Durch eine entsprechende Mechanik, beispielsweise ein Getriebe, wird das erste Halteelement 11 durch die Bewegung des Handhebels 4 an das zweite Halteelement 12 angenähert. Dies ist in Figur 2c dargestellt.

In Figur 2d ist schließlich die Arbeitsstellung illustriert. Die Kartusche 3 wird sicher durch die Kartuschenaufnahme gehalten, in dem der Kartuschenhals 31 zwischen dem ersten und dem zweiten Halteelement 11, 12 eingeklemmt wird. Der Handhebel 4 befindet sich in einer horizontalen Stellung, vorzugsweise parallel zu Haupterstreckungsebenen der Halteelemente 11, 12.

Um eine unbeabsichtigte Öffnung der Kartuschenaufnahme zu verhindern, kann die Kartuschenhalterung 1 derart vorgesehen sein, dass der Handhebel 4 die Kartuschenaufnahme in der Arbeitsstellung reversibel verriegelt. Dies kann beispielsweise durch ein Kniegelenk erfolgen. Um die Kartuschenaufnahme von der Arbeitsstellung wieder in die Ladestellung zu überführen, müsste der Benutzer in diesem Fall den Handhebel 4, vorzugsweise gegen einen Anfangswiderstand, von der horizontalen in die vertikale Stellung verbringen.

Die Kartuschenaufnahme weist eine hier nicht dargestellte Wasserzuführung zum Einleiten von Wasser in die Kartusche 3 sowie eine Druckluftzuführung zum Einleiten von Druckluft in die Kartusche 3 auf. Die Wasserzuführung und die Druckluftzuführung können dabei beispielsweise an dem zweiten Haltelement 12 angeordnet sein und/oder mit diesem verbunden sein. Im Betrieb wird Wasser in die Kartusche 3 eingeleitet, welches mit der Getränkesubstanz in der Kartusche 3 wechselwirkt und ein Getränk erzeugt. Durch Einleitung von Druckluft wird das Getränk aus der Kartusche 3 ausgetrieben und über einen Getränkeauslauf der Vorrichtung in ein Getränkebehältnis, beispielsweise ein Glas oder eine Tasse, ausgegeben.

Nach erfolgter Getränkezubereitung wird die Kartuschenaufnahme vorzugsweise von der Arbeitsstellung in die Ladestellung überführt und die nunmehr leere Kartusche 3 entsorgt. Dies kann manuell oder automatisch erfolgen.

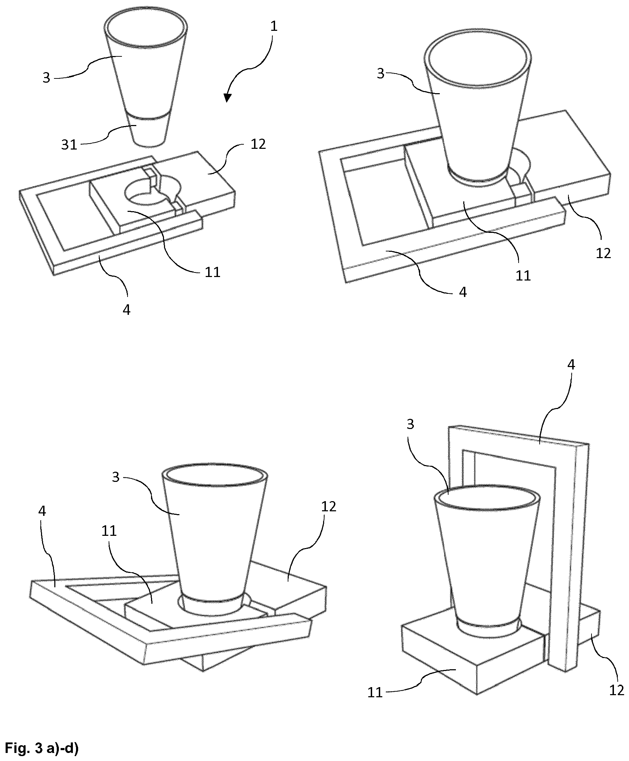

In den Figuren 3a bis 3d ist eine Kartuschenhalterung 1 gemäß einem nicht erfindungsgemäßen zweiten Beispiel beim Übegang von der Ladestellung in die Arbeitsstellung dargestellt.

Dabei entspricht das zweite Beispiel im Wesentlichen der im Zusammenhang mit den Figuren 1a-1d beschriebenen ersten Beispiel weswegen grundsätzlich auf die diesbezüglichen Ausführungen verwiesen wird.

Der Unterschied besteht insbesondere darin, dass der Handhebel 4 nun in der Ladestellung eine horizontale Stellung einnimmt und zum Überführen der Kartuschenaufnahme von der Ladestellung in die Arbeitsstellung in eine vertikale Stellung, in der der Handhebel 4 parallel zu der Längsachse der Kartusche 3 ausgerichtet ist, verbracht wird.

Vorzugsweise ist der Handhebel 4 dabei wenigstens teilweise oberhalb der Kartusche 3 angeordnet so dass die Kartusche 3 nicht in der Arbeitsstellung aus der Kartuschenhalterung 1 entfernt werden kann.

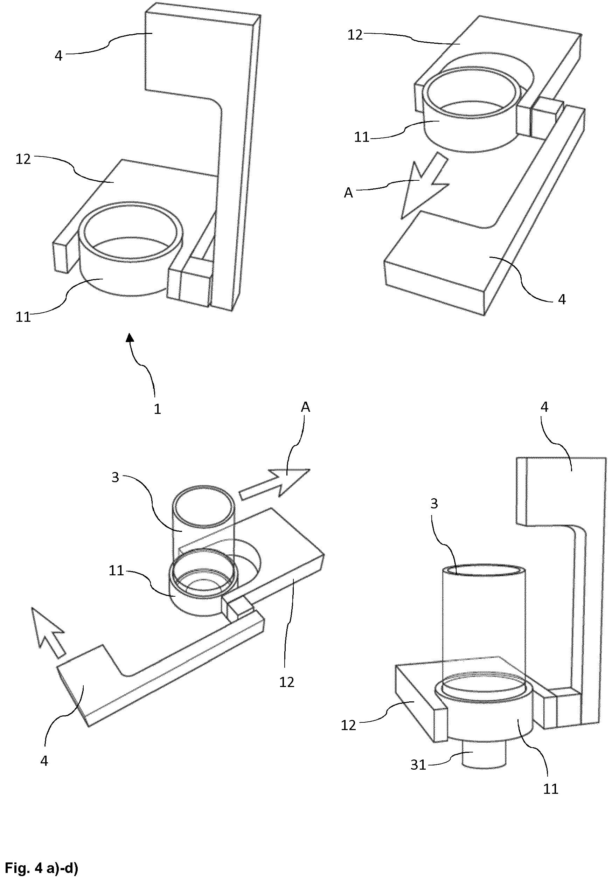

In den Figuren 4a bis 4d ist eine Kartuschenhalterung 1 gemäß einem nicht erfindungsgemäßen dritten Beispiel beim Übergang von der Ladestellung in die Arbeitsstellung dargestellt. Bezüglich der allgemeinen Funktionsweise der dargestellten Kartuschenhalterung 1 wird auf die vorherigen Beispiele verwiesen. Im Folgenden werden insbesondere die Unterschiede dieser Beispiel zu den zuvor beschriebenen Beispiele erläutert.

Gemäß dem dargestellten, dritten Beispiel ist das erste Halteelement 11 in Form eines Ringbauelements vorgesehen. Das erste Halteelement 11 umfängt den Kartuschenhals 31 also vollständig und fixiert diesen.

In der Arbeitsstellung ist dabei das Ringbauelement nahezu vollständig in einer u-förmige Ausnehmung des zweiten Halteelements 12 angeordnet. In der Ladestellung ist das Ringbauelement dabei, wie zuvor beschrieben, entlang einer linearen Verschieberichtung A, die hier parallel zu einer Haupterstreckungsebene des zweiten Halteelements 12 vorgesehen ist, von der Ausnehmung beabstandet.

Auch hier wird die Überführung zwischen der Ladestellung und der Arbeitsstellung, bzw. umgekehrt, durch einen Handhebel 4 bewirkt, der hier jedoch im Unterschied zu der ersten und der zweiten Ausführungsform lediglich an einer Seite des zweiten Halteelements12 angeordnet ist. Hier weist der Handhebel 4 ein breiteres Griffstück auf, damit ein Benutzer den Hebel bequemer bedienen kann.

Wie in der zweiten Ausführungsform ist gemäß der dritten Ausführungsform der Handhebel 4 in der Arbeitsstellung vertikal ausgerichtet.

Vorliegend ist die Kartusche 3 zylinderförmig vorgesehen, wobei der Kartuschenhals 31 einen geringeren Durchmesser aufweist. Hierdurch wird oberhalb des Kartuschenhalses 31 ein Absatz gebildet, mit dem die Kartusche 3 beispielsweise auf dem Ringbauelement des ersten Halteelements 11 aufliegen kann.

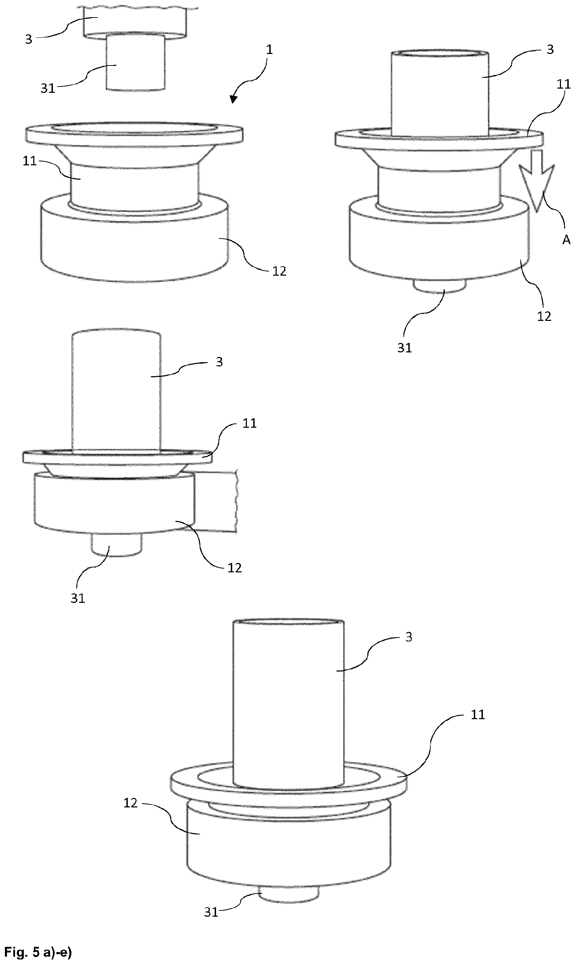

In den Figuren 5a bis 5d ist eine Kartuschenhalterung 1 gemäß einer erfindungsgemäßen Ausführungsform der vorliegenden Erfindung beim Übergang von der Ladestellung in die Arbeitsstellung dargestellt. Bezüglich der allgemeinen Funktionsweise der dargestellten Kartuschenhalterung 1 wird auf die vorherigen Ausführungen verwiesen. Im Folgenden werden insbesondere die Unterschiede dieser Ausführungsform zu den zuvor beschriebenen Ausführungsformen erläutert.

Gemäß der dargestellten Ausführungsform sind sowohl das erste Halteelement 11, als auch das zweite Halteelement 12 ringförmig ausgebildet wobei das erste Halteelement 11 die Aufnahmeöffnung aufweist und das zweite Halteelement 12 eine weitere Aufnahmeöffnung aufweist. In der Ladestellung sind beide Halteelemente 11, 12 dabei voneinander axial, d.h. parallel einer durch die Öffnungen verlaufenden Mittelachse, beabstandet. Das erste Halteelement 11 und das zweite Halteelement 12 können dabei einen gleichen Durchmesser, insbesondere Innendurchmesser, aufweisen, sie können aber auch, wie hier dargestellt, unterschiedliche Durchmesser aufweisen.

In jedem Fall ist es gemäß dieser Ausführungsform aber vorgesehen, dass das erste Halteelement 11 und das zweite Halteelement 12 zueinander kongruent angeordnet sind. Dies bedeutet insbesondere, dass im vorliegenden Fall, in dem die Aufnahmeöffnungen kreisförmig vorgesehen sind, die Mittelachsen beider Halteelemente 11, 12 also identisch sind.

In der Ladestellung wird die Kartusche 3 in axialer Richtung in das erste Halteelement 11 eingesetzt. Die Überführung in die Arbeitsstellung erfolgt hier beispielsweise durch Druck auf einen kreisrandförmigen Flansch des ersten Halteelements 11. Alternativ oder zusätzlich ist auch hier eine entsprechende Mechanik und/oder ein Handhebel einsetzbar.

In den Arbeitsstellung sind das erste Halteelement 11 und das zweite Halteelement 12 aneinander angenähert. Der Fachmann versteht, dass die Arbeitsstellung insbesondere dadurch definierbar ist, dass die Wasserzuführung und die Druckluftzuführung mit dem Zulauf der Kartusche 3 und/oder der Getränkeauslauf mit dem Auslauf der Kartusche 3 in, insbesondere flüssigkeitsdichter, Verbindung stehen.

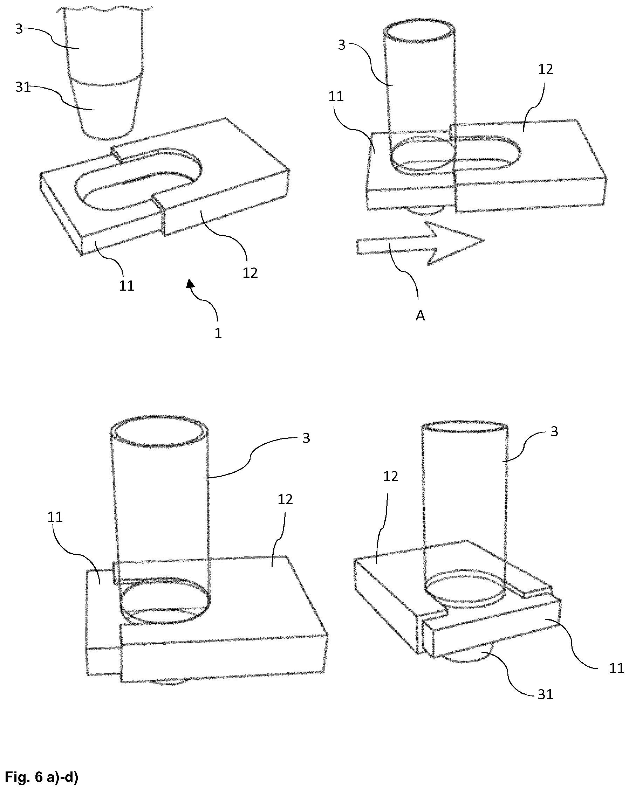

In den Figuren 6a bis 6d ist eine Kartuschenhalterung 1 gemäß einem nicht erfindungsgemäßen Beispiel beim Übergang von der Ladestellung in die Arbeitsstellung dargestellt. Auch hier wird grundsätzlich auf die Beispiele insbesondere betreffend die erste und zweite Beispiel verwiesen.

Erneut erfolgt eine Überführung zwischen Ladestellung und Arbeitsstellung durch eine lineare Translation entlang einer Verschieberichtung A. Hier sind das erste Halteelement 11 und das zweite Halteelement 12 teilweise ineinander verschiebbar angeordnet. In der Ladestellung weist die durch das ersten Halteelement 11 und das zweite Halteelement 12 gebildete Aufnahmeöffnung die Form eines Langlochs ein, in die die Kartusche 3 eingesetzt wird.

Das erste Halteelement 11 wird sodann in Richtung des zweiten Halteelements 12 verschoben, bis in der Arbeitsstellung die Aufnahmeöffnung vorliegend eine Kreisform aufweist. Somit ist die Kartusche gegen ungewollte Bewegungen form- und/oder kraftschlüssig gesichert.

Die Überführung der Kartuschenaufnahme zwischen der Ladestellung und der Arbeitsstellung erfolgt hier, in dem ein Benutzer unmittelbar das erste Halteelement 11 schubladenartig verschiebt. Es ist jedoch alternativ oder zusätzlich auch denkbar, dass ein Handhebel 4 zur Unterstützung der Bewegung vorgesehen ist, und/oder das erste Halteelement einen Griff, z.B. in Form einer Ausnehmung oder einer Griffmulde, aufweist, um dem Benutzer einen besseren Griff zu ermöglichen.

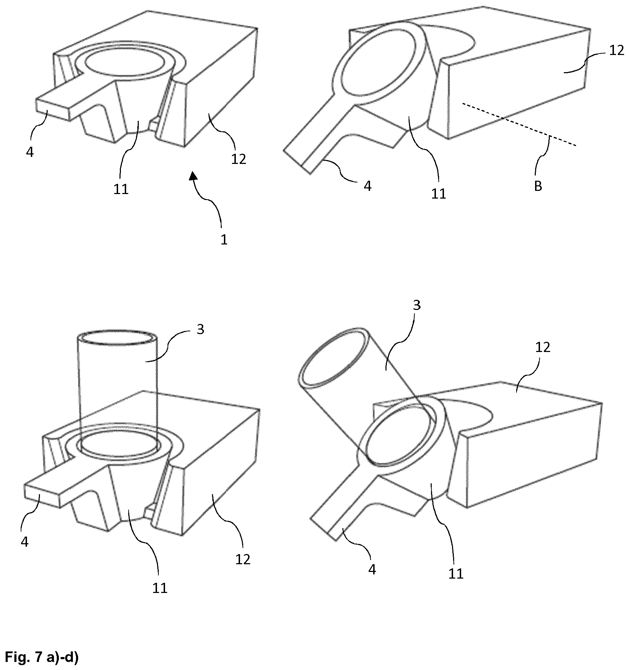

In den Figuren 7a bis 7d ist eine Kartuschenhalterung 1 gemäß einem nicht erfindungsgemäßen Beispiel beim Übergang von der Ladestellung in die Arbeitsstellung dargestellt. Bezüglich der generellen Funktionsweise der Vorrichtung wird auf das zuvor gesagte verwiesen. Im vorliegenden Fall weist das erste Halteelement 11 eine kegelstumpfförmige Gestalt auf mit einem an der von dem zweiten Halteelement 12 abgewandten Seite des ersten Halteelements 11 angeordneten Handhebel 4.

Das erste Halteelement ist dabei über eine Drehachse B mit dem zweiten Halteelement 12 verbunden und relativ zu diesem verkippbar vorgesehen. Dies ist insbesondere in Figur 7b dargestellt. Gemäß der dargestellten Ausführungsform ist das erste Halteelement 11 dabei teilweise in einer Ausnehmung des zweiten Halteelements 12 angeordnet, die eine zu dem ersten Haltelement 11 korrespondierende Form aufweist.

Um die Kartuschenaufnahme in die Ladestellung zu überführen ergreift ein Benutzer den Handhebel 4 und verkippt das erste Halteelement 11, so dass dieses in einem Winkel zu einer Haupterstreckungsebene des zweiten Halteelements 12 angeordnet ist, also bezüglich einer Horizontalen geneigt ist, beispielsweise in einem Winkel von 30°-60°, insbesondere in einem Winkel von 45°.

Die Kartusche 3, deren Kartuschenhals 31 vorzugsweise eine an die Innenfläche des ersten Halteelements 11 angepasste Form aufweist, wird in das erste Halteelement 11 eingesetzt und die Kartuschenaufnahme durch Verkippung des ersten Halteelements 11 in die Arbeitsstellung überführt. Durch die geneigte Anordnung des ersten Halteelements 11 in der Ladestellung ist die Kartusche 3 für einen Benutzer bequem in die Vorrichtung einsetzbar, und durch den Handhebel 4 und die Verkippung um die Drehachse B ist das erste Halteelement 11 in einfacher Weise in die Arbeitsstellung überführbar.

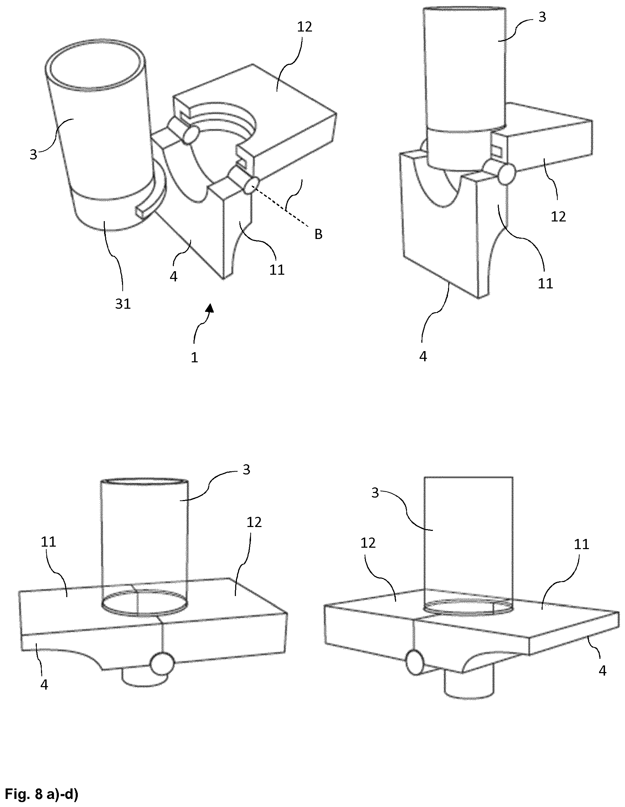

In den Figuren 8a bis 8d ist schließlich eine Kartuschenhalterung 1 gemäß einem nicht erfindungsgemäßen Beispiel beim Übergang von der Ladestellung in die Arbeitsstellung dargestellt. Dabei weist die siebte Ausführungsform Ähnlichkeiten zu der ersten bzw. zweiten Ausführungsform und der sechsten Ausführungsform auf, weswegen grundsätzlich auf die diesbezüglichen Ausführungen verwiesen wird.

Ähnlich zu der sechsten Ausführungsform ist das erste Halteelement 11 ebenfalls um eine Drehachse B relativ zu dem zweiten Halteelement 12 verkippbar angeordnet. Dabei weisen jedoch das erste und das zweite Halteelement 11, 12 ähnlich wie in der ersten Ausführungsform jeweils eine im Wesentlichen halbkreisförmige oder u-förmige Ausnehmung auf, so dass in der Arbeitsstellung eine kreisförmige Aufnahmeöffnung gebildet wird.

In der Ladestellung ist das erste Halteelement 11 um einen 90°-Winkel relativ zu dem zweiten Halteelement 12 verschwenkt. Der Fachmann versteht, dass auch eine Vielzahl von weiteren Winkeln möglich sind, solange die Kartusche 3 in die Kartuschenhalterung 1 einsetzbar ist.

Hier weist der Kartuschenhals 3 einen teilweise umlaufenden Kragen auf, der mit einer entsprechend geformten Aufnahmerille des zweiten Halteelements 12 form- und/oder kraftschlüssig zusammenwirkend vorgesehen ist. Die Kartusche 3 wird folglich seitlich in die Ausnehmung des zweiten Halteelements 12 eingesetzt, so dass der Kragen in die Rille oder Nut eingreift.

Zur Überführung der Kartuschenaufnahme in die Arbeitsstellung wird das erste Halteelement 11 an einem einstückig mit diesem Handhebel 4 nach oben verschwenkt bis es zusammen mit dem zweiten Halteelement 12 eine durchgehende Fläche bildet bzw. eine kreisrunde Aufnahmeöffnung in der die Kartusche 3 sicher gehalten wird. Vorzugsweise umfasst die Kartuschenhalterung 1 einen Verriegelungsmechanismus, um ein unbeabsichtigtes Verschwenken des ersten Halteelements 11 in der Arbeitsstellung zu verhindern.

Nach der Getränkezubereitung wird das erste Halteelement 11, ggf. nach Lösen einer Verriegelung, erneut nach unten verschwenkt und die Kartusche 3 durch eine lineare Translation der Kartuschenaufnahme entnommen und anschließend entsorgt.

### Bezugszeichenliste

- 1: - Kartuschenhalterung

- 3: - Kartusche
- 4: - Handhebel
- 11: - erstes Halteelement
- 12: - zweites Halteelement
- 31: - Kartuschenhals
- A: - Verschieberichtung
- B: - Drehachse

## Patentansprüche

1. Vorrichtung zur Herstellung eines Getränks aufweisend eine Kartuschenhalterung (1) mit einer Kartuschenaufnahme zur Aufnahme einer mit einer Getränkesubstanz befüllten Kartusche (3), wobei die Kartuschenaufnahme eine Aufnahmeöffnung umfasst, wobei die Kartuschenaufnahme eine Wasserzuführung zum Einleiten von Wasser in die Kartusche (3) und eine Druckluftzuführung zum Einleiten von Druckluft in die Kartusche (3) aufweist, wobei die Kartuschenaufnahme zwischen einer Ladestellung, in welcher die Kartusche (3) in die Aufnahmeöffnung einsetzbar oder aus der Aufnahmeöffnung herausnehmbar ist, und einer Arbeitsstellung, in welcher durch Einleiten des Wassers und der Druckluft in die Kartusche (3) und Wechselwirkung des Wassers mit der Getränkesubstanz ein Getränk in der Kartusche (3) erzeugbar und aus einem Getränkeauslauf der Kartusche (3) ausleitbar ist, überführbar ist, **dadurch gekennzeichnet, dass** die Kartuschenaufnahme ein erstes Halteelement (11) und ein zweites Halteelement (12) aufweist, wobei das erste Halteelement (11) die Aufnahmeöffnung aufweist und wobei zur Überführung der Kartuschenaufnahme von der Ladestellung in die Arbeitsstellung oder von der Arbeitsstellung in die Ladestellung das erste Halteelement (11) relativ zum zweiten Halteelement (12) bewegbar ausgebildet ist, wobei das zweite Halteelement (12) eine weitere Aufnahmeöffnung aufweist und wobei das erste und das zweite Halteelement (11, 12) relativ zueinander derart angeordnet sind, dass die Aufnahmeöffnung und die weitere Aufnahmeöffnung deckungsgleich und entlang einer axialen Richtung zueinander versetzt angeordnet sind, wobei das erste und das zweite Halteelement (11, 12) in axialer Richtung in der Ladestellung voneinander beabstandet und in der Arbeitsstellung gegenüber der Ladestellung einander angenähert sind.

2. Vorrichtung nach Anspruch 1, wobei die Vorrichtung einen Handhebel (4) zum Überführen der Kartuschenaufnahme von der Ladestellung in die Arbeitsstellung oder von der Arbeitsstellung in die Ladestellung aufweist, wobei der Handhebel (4) an das erste und/oder zweite Halteelement (11, 12) angebunden ist.

3. Vorrichtung nach Anspruch 2, wobei der Handhebel (4) zwischen einer ersten Betätigungsstellung, in welcher die Kartuschenaufnahme in der Ladestellung ist, und einer zweiten Betätigungsstellung, in welcher die Kartuschenaufnahme in der Arbeitsstellung ist, verschwenkbar ist, wobei der Handhebel (4) einen Handgriff umfasst, welcher in der ersten Betätigungsstellung die Kartuschenaufnahme zumindest teilweise umschließt.

## Claims

1. A device for producing a beverage having a cartridge mounting (1) having a cartridge receptacle for receiving a cartridge (3) filled with a beverage substance, wherein the cartridge receptacle comprises a receptacle opening, wherein the cartridge receptacle has a water infeed for directing water into the cartridge (3) and a compressed air infeed for directing compressed air into the cartridge (3), wherein the cartridge receptacle is capable of being transferred between a loading position in which the cartridge (3) is capable of being inserted into the receptacle opening or capable of being retrieved from the receptacle opening, and an operating position in which, by directing the water and the compressed air into the cartridge (3) and by the water interacting with the beverage substance, a beverage is capable of being generated in the cartridge (3) and capable of being directed out of a beverage outlet of the cartridge (3), **characterized in that** the cartridge receptacle has a first holding element (11) and a second holding element (12), wherein the first holding element (11) has the receptacle opening, and wherein the first holding element (11), for transferring the cartridge receptacle from the loading position to the operating position, or from the operating position to the loading position, is configured so as to be movable relative to the second holding element (12), wherein the second holding element (12) has a further receptacle opening, and wherein the first and the second holding element (11, 12) are disposed relative to one another in such a manner that the receptacle opening and the further receptacle opening are disposed so as to be congruent and mutually offset along an axial direction, wherein the first and the second holding element (11, 12) in the axial direction are mutually spaced apart in the loading position, and are moved closer to one another in the operating position as compared to the loading position.

2. The device as claimed in claim 1, wherein the device has a hand lever (4) for transferring the cartridge receptacle from the loading position to the operating position, or from the operating position to the loading position, wherein the hand lever (4) is linked to the first and/or the second holding element (11, 12).

3. The device as claimed in claim 2, wherein the hand lever (4) is pivotable between a first activating position in which the cartridge receptacle is in the loading position, and a second activating position in which the cartridge receptacle is in the operating position, wherein the hand lever (4) comprises a handle which in the first activating position at least in part encloses the cartridge receptacle.

## Revendications

1. Dispositif de préparation d'une boisson présentant un support de cartouche (1) avec un logement de cartouche pour recevoir une cartouche (3) remplie avec une substance pour boisson, le logement de cartouche comprenant une ouverture de réception, le logement de cartouche présentant une alimentation en eau pour introduire de l'eau dans la cartouche (3) et une alimentation en air comprimé pour introduire de l'air comprimé dans la cartouche (3), le logement de cartouche pouvant être transféré entre une position de chargement dans laquelle la cartouche (3) peut être insérée dans l'ouverture de réception ou peut être ressortie de l'ouverture de réception, et une position de travail dans laquelle, par introduction d'eau et d'air comprimé dans la cartouche (3) et interaction entre l'eau et la substance pour boisson, une boisson peut être produite dans la cartouche (3) et peut être évacuée par une sortie de boisson de la cartouche (3),
**caractérisé en ce que** le logement de cartouche présente un premier élément de retenue (11) et un deuxième élément de retenue (12), le premier élément de retenue (11) présentant l'ouverture de réception et, pour le transfert du logement de cartouche de la position de chargement à la position de travail ou de la position de travail à la position de chargement, le premier élément de retenue (11) étant réalisé de manière à pouvoir être déplacé par rapport au deuxième élément de retenue (12), le deuxième élément de retenue (12) présentant une ouverture de réception supplémentaire et le premier et le deuxième élément de retenue (11, 12) étant disposés l'un par rapport à l'autre de telle sorte que l'ouverture de réception et l'ouverture de réception supplémentaire soient en coïncidence et soient disposées de manière décalée l'une par rapport à l'autre le long d'une direction axiale, le premier et le deuxième élément de retenue (11, 12) étant espacés l'un de l'autre dans la direction axiale dans la position de chargement et étant rapprochés l'un de l'autre par rapport à la position de chargement dans la position de travail.

2. Dispositif selon la revendication 1, le dispositif présentant un levier manuel (4) pour transférer le logement de cartouche de la position de chargement à la position de travail ou de la position de travail à la position de chargement, le levier manuel (4) étant raccordé au premier et/ou au deuxième élément de retenue (11, 12).

3. Dispositif selon la revendication 2, dans lequel le levier manuel (4) peut être pivoté entre une première position d'actionnement dans laquelle le logement de cartouche est dans la position de chargement et une deuxième position d'actionnement dans laquelle le logement de cartouche est dans la position de travail, le levier manuel (4) comprenant une poignée qui entoure au moins en partie le logement de cartouche dans la première position d'actionnement.
